# DEMANDE DE BREVET EUROPEEN

(11) **EP 3 415 785 A1**
(43) Date de publication de la demande: **19.12.2018**
(21) Numéro de dépôt: 18176661.9
(22) Date de dépôt: 08.06.2018
(51) Int. Cl.: F16F 1/04

(54) **SYSTÈME DE DIRECTION POUR VÉHICULE AUTONOME COMPORTANT UN VOLANT REPLIABLE ÉQUIPÉ D'UN AIRBAG**

(30) Priorité: 12.06.2017 FR 1755201
(71) Demandeur: PSA Automobiles SA, 78300 Poissy (FR)
(72) Inventeur: RIGA, Alessadro, 75004 Paris (FR)

(57) **Abrégé**

L'invention a pour objet pour un système de direction pour un véhicule automobile, comprenant une colonne de direction (2) allongée longitudinalement suivant un axe de rotation (A), et un volant de direction fixé à l'arrière de la colonne de direction (2), ce système de direction étant remarquable en ce que le volant de direction comporte deux branches latérales (14), reliées chacune à la colonne de direction (2) par un pivot (B), et en ce que la partie arrière de la colonne de direction (2) comporte un capot allongé longitudinalement (10), contenant un coussin gonflable de sécurité.

## Description

La présente invention concerne une commande de direction pour un véhicule automobile, ainsi qu'un véhicule automobile équipé d'une telle commande de direction.

Les véhicules automobiles comportent une colonne de direction recevant à l'arrière un volant manoeuvré par le conducteur, qui est reliée à un boîtier de direction commandant le pivotement des roues avant du véhicule.

Sur certains véhicules, en particulier sur des véhicules présentant une possibilité de conduite autonome, on souhaite réduire suivant les conditions de roulage l'encombrement du volant pour augmenter l'espace disponible à bord.

Un type de commande de direction connu, présenté notamment par le document US-A1-20160362126, comporte une colonne de direction qui peut se rétracter vers l'avant ou se replier vers le bas, pour dégager un espace devant le conducteur.

Par ailleurs un type de volant de direction connu, présenté notamment par le document CN-U-203294169, comporte deux branches latérales formant des portions de la jante de ce volant, reliées à un moyeu fixé à la colonne de direction par une liaison permettant différents écartements pour obtenir un diamètre variable du volant.

Toutefois l'encombrement latéral de ce volant reste toujours important ce qui pose des problèmes, notamment dans le cas d'une conduite autonome du véhicule. De plus il faut prévoir l'intégration d'un coussin gonflable de sécurité, appelé « airbag » en langue anglaise, qui doit se déployer devant le conducteur.

La présente invention a notamment pour but d'éviter ces inconvénients de la technique antérieure.

Elle propose à cet effet un système de direction pour un véhicule automobile, comprenant une colonne de direction allongée longitudinalement suivant un axe de rotation, et un volant de direction fixé à l'arrière de la colonne de direction, ce système de direction étant remarquable en ce que le volant de direction comporte deux branches latérales, reliées chacune à la colonne de direction par un pivot, et en ce que la partie arrière de la colonne de direction comporte un capot allongé longitudinalement, contenant un coussin gonflable de sécurité.

Un avantage de ce système de direction est que les deux branches latérales reliées par un pivot à la colonne de direction permettent un repli de ces branches l'une sur l'autre de chaque côté de la colonne de direction, pour présenter un encombrement latéral réduit, qui est intéressant en particulier dans le cas d'un véhicule autonome afin de dégager de l'espace devant le conducteur.

De plus le capot allongé longitudinalement permet de réaliser le repliement des deux branches latérales l'une sur l'autre au plus près de l'axe de la colonne de direction, en formant un volume intérieur sous ce capot qui grâce à sa longueur, est suffisant pour loger un coussin gonflable de sécurité destiné au conducteur.

Le système de direction selon l'invention peut comporter de plus une ou plusieurs des caractéristiques suivantes, qui peuvent être combinées entre elles.

Avantageusement, la partie arrière de la colonne de direction comporte dans la direction latérale une largeur réduite par rapport à la partie avant, présentant de chaque côté une face latérale recevant une branche du volant qui est repliée.

Dans ce cas, avantageusement chaque branche est reliée par son pivot à un support fixé sur une face latérale de la colonne de direction.

Selon un mode de réalisation, le capot recouvre l'extrémité arrière de la colonne de direction.

Selon un autre mode de réalisation, le capot commence en avant de l'extrémité arrière de la colonne de direction.

Dans ce cas, avantageusement le capot vient sur le dessus de la colonne de direction.

De plus, le capot peut venir sur les côtés de la colonne de direction.

L'invention a aussi pour objet un véhicule automobile comportant un système de direction comprenant l'une quelconque des caractéristiques précédentes.

Avantageusement, la colonne de direction étant reliée à la caisse du véhicule par un pivot transversal, le siège du conducteur présente dans sa partie médiane avant une fente verticale pouvant recevoir la colonne de direction avec son volant replié.

En particulier, le véhicule peut comporter une fonction de conduite autonome permettant un roulage sans manoeuvrer le volant

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est une vue d'un système de direction selon l'invention, comportant un capot de coussin gonflable disposé à l'extrémité arrière de la colonne de direction ;
- la figure 2 est une vue arrière de ce système de direction ;
- la figure 3 est une vue en coupe suivant un plan de coupe médian vertical, de ce système de direction rabattu à l'intérieur du siège du conducteur ;
- la figure 4 présente un système de direction avec son volant replié, suivant une variante comportant un capot disposé vers l'avant ; et
- la figure 5 présente un système de direction suivant une autre variante comportant un capot disposé plus en avant.

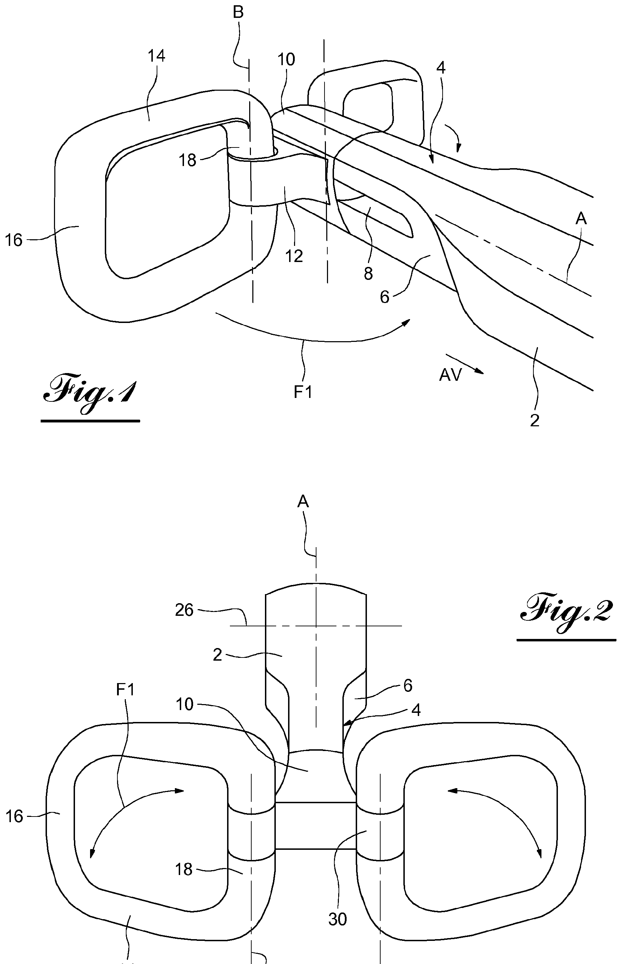

Les figures 1 et 2 présentent une colonne de direction 2 en rotation suivant un axe longitudinal A pour assurer la direction du véhicule, reliée vers le côté avant indiqué par la flèche « AV », à un boîtier de direction commandant l'orientation des roues avant d'un véhicule automobile.

La partie arrière 4 de la colonne de direction 2 comporte deux faces latérales sensiblement planes 6 formant des creux, présentant un léger bombé, disposées verticalement quand la direction du véhicule est droite. La partie centrale des faces planes latérales 6 comporte un perçage allongé longitudinalement 8, qui relie ces deux faces entre elles.

Le volant est constitué par deux branches latérales 14, présentant chacune une forme sensiblement rectangulaire allongée horizontalement, comportant des angles arrondis, permettant une prise en main par une saisie de la partie verticale extérieure 16 de chaque branche.

La partie verticale intérieure 18 de chaque branche 14 est reliée par un pivot d'axe B disposé dans un plan perpendiculaire à l'axe de la colonne A, et parallèlement aux faces planes latérales 6, à un support latéral 12 qui est fixé sur la face plane latérale de son côté.

Chaque branche 16 peut se replier vers l'arrière comme indiqué par les flèches F1, pour venir se superposer l'une sur l'autre en s'ajustant sur les faces planes latérales 6. De cette manière une fois replié, l'encombrement latéral du volant est sensiblement équivalent à celui de la partie large avant de la colonne de direction 2. On obtient un ensemble présentant un encombrement latéral minimum.

L'extrémité de la partie arrière 4 de la colonne de direction 2, comporte un capot de coussin gonflable 10 formant un capuchon venant par l'arrière, qui s'étend longitudinalement sur environ la moitié de cet partie arrière, en la recouvrant de manière ajustée de façon à la prolonger en présentant une section transversale constante.

L'arrière du capot 10 comporte deux ailes latérales 30, qui recouvrent chacune le côté arrière d'un support 12 d'une branche 14.

Le capot 10 ferme un volume intérieur entre les deux supports 12, qui s'étend longitudinalement de l'extrémité arrière de la colonne de direction 2 jusqu'à l'extrémité avant de ces supports latéraux, et latéralement entre ces deux supports. Ce volume intérieur s'ouvre par un coulissement longitudinal vers l'arrière du capot 10, sous l'effet du gonflage d'un coussin gonflable contenu à l'intérieur en cas de déclenchement.

Après un repliement vers l'avant des branches 14 du volant, pour une colonne de direction 2 restant dans la même position, le coussin gonflable de sécurité reste opérationnel pour le conducteur en cas d'accident.

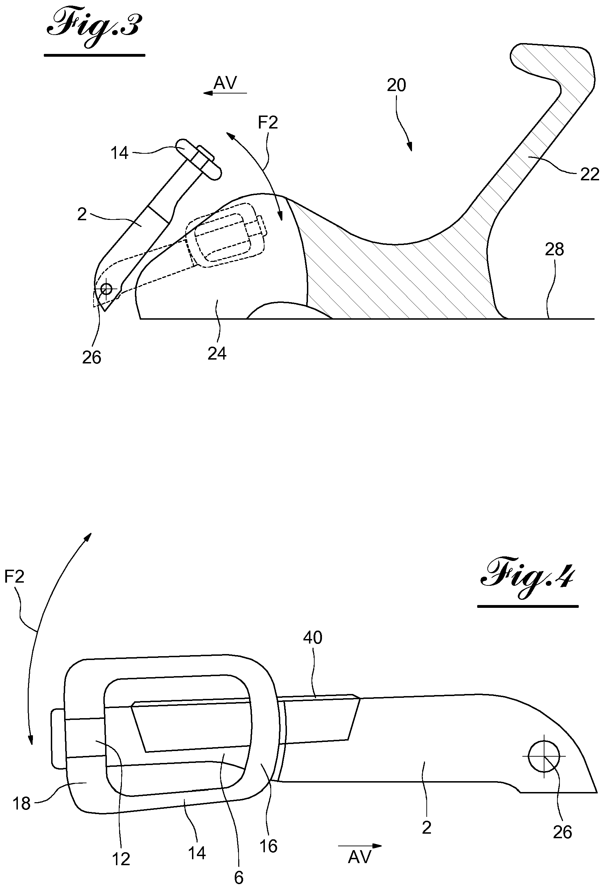

La figure 3 présente un siège du conducteur 20 fixé au plancher du véhicule 28, comportant du côté arrière un dossier 22. La partie avant du siège 20 comporte une fente verticale 24 réalisée dans un plan médian, qui est disposée en-dessous de la colonne de direction 2.

L'extrémité avant de la colonne de direction 2 est fixée à la caisse du véhicule par un pivot transversal 26, permettant une inclinaison de la colonne autour de ce pivot, comme indiqué par la flèche F2.

Après avoir replié vers l'avant les deux branches 14 du volant de direction, le conducteur peut rabattre la colonne de direction 2 en la basculant autour de son pivot transversal 26, et en insérant l'ensemble dans la fente verticale 24 du siège 20.

On obtient une position finale rabattue comportant le volant entièrement intégré à l'intérieur du siège 20, ce qui dégage l'espace au-dessus de ce siège en donnant plus d'habitabilité et de confort pour le conducteur. En particulier le conducteur peut réaliser différentes opérations de travail ou de loisir, comme la lecture ou le travail sur un ordinateur.

La figure 4 présente un système de direction comportant un volant à deux branches 14, reliées chacune par un support 12 fixé sur une face plane latérale 6 de la colonne de direction 2, comme présenté figure 1.

Le capot 40 commence juste en arrière des supports 12, puis s'étend longitudinalement vers l'avant en couvrant le dessus de la colonne de direction 2 ainsi que les faces planes latérales 6, et en continuant vers l'avant sur la partie plus large venant après ces faces latérales planes et après les branches 14 repliées.

Le capot 40 ferme un volume intérieur disposé en dessous de ce capot, contenant le coussin gonflable de sécurité. En cas de déclenchement de ce coussin gonflable, le capot 40 est éjecté vers le haut.

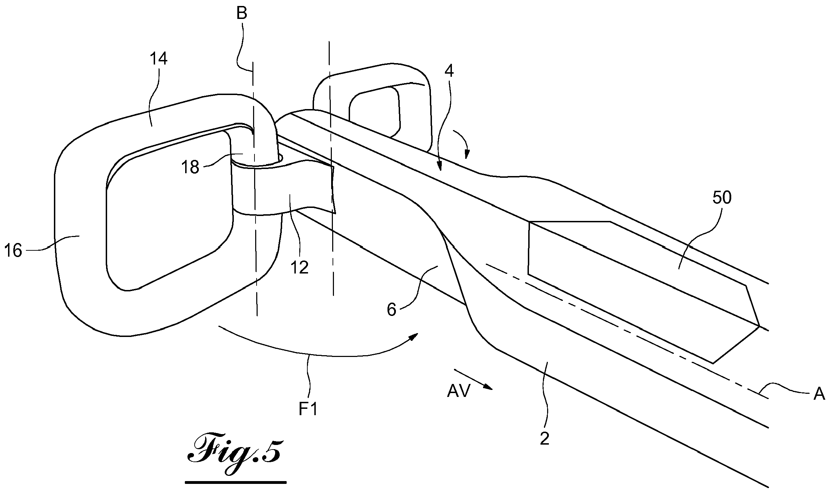

La figure 5 présente un capot 50 allongé longitudinalement, commençant en partant de l'arrière à la fin des faces planes latérales 6, et qui reste sur le dessus de la colonne de direction 2, sans descendre sur les côtés.

La partie avant plus large de la colonne de direction 2 recevant le capot 50, permet de donner un espace suffisant au volume intérieur sous ce capot recevant le coussin gonflable.

D'une manière générale, on obtient pour ces différentes variantes une colonne de direction 2 comprenant une partie arrière fine permettant d'intégrer les deux branches repliées 14 du volant, présentant un encombrement très réduit, qui comporte grâce au volume intérieur fermé par le capot 10, s'étendant suivant une direction longitudinale, un espace suffisant pour recevoir un coussin gonflable de sécurité nécessaire pour le conducteur.

L'espace libéré par le repli du volant est un sujet important pour les véhicules à conduite autonome, afin de bénéficier pleinement de nouvelles fonctionnalités permises par le roulage sans commande du volant.

## Revendications

1. Système de direction pour un véhicule automobile, comprenant une colonne de direction (2) allongée longitudinalement suivant un axe de rotation (A), et un volant de direction fixé à l'arrière de la colonne de direction (2), **caractérisé en ce que** le volant de direction comporte deux branches latérales (14), reliées chacune à la colonne de direction (2) par un pivot (B), et **en ce que** la partie arrière de la colonne de direction (2) comporte un capot allongé longitudinalement (10, 40, 50), contenant un coussin gonflable de sécurité.

2. Système de direction selon la revendication 1, **caractérisé en ce que** la partie arrière (4) de la colonne de direction (2) comporte dans la direction latérale une largeur réduite par rapport à la partie avant, présentant de chaque côté une face latérale (6) recevant une branche du volant (14) qui est repliée.

3. Système de direction selon la revendication 2, **caractérisé en ce que** chaque branche (14) est reliée par son pivot (B) à un support (12) fixé sur une face latérale (6) de la colonne de direction (2).

4. Système de direction selon l'une quelconque des revendications précédentes, **caractérisé en ce que** le capot (10) recouvre l'extrémité arrière de la colonne de direction (2).

5. Système de direction selon l'une quelconque des revendications 1 à 3, **caractérisé en ce que** le capot (40, 50) commence en avant de l'extrémité arrière de la colonne de direction (2).

6. Système de direction selon la revendication 5, **caractérisé en ce que** le capot (40, 50) vient sur le dessus de la colonne de direction (2).

7. Système de direction selon la revendication 6, **caractérisé en ce que** le capot (40) vient sur les côtés de la colonne de direction (2).

8. Véhicule automobile comportant un système de direction, **caractérisé en ce que** ce système de direction est selon l'une quelconque des revendications précédentes.

9. Véhicule automobile selon la revendication 8, **caractérisé en ce que** la colonne de direction (2) est reliée à la caisse de ce véhicule par un pivot transversal (26), et **en ce que** le siège du conducteur (20) présente dans sa partie médiane avant une fente verticale (24) pouvant recevoir la colonne de direction (2) avec son volant replié.

10. Véhicule automobile selon la revendication 8 ou 9, **caractérisé en ce qu'**il comporte une fonction de conduite autonome permettant un roulage sans manoeuvrer le volant.
